# EUROPEAN PATENT SPECIFICATION

(11) **EP 1 379 930 B1**
(45) Date of publication and mention of the grant of the patent: **21.04.2010**
(21) Application number: 02704648.1
(22) Date of filing: 11.01.2002
(51) Int. Cl.: G06F 21/02

(54) **SECURITY METHOD FOR TRANSFERRING SHARED KEYS**
SICHERHEITSVERFAHREN ZUR ÜBERTRAGUNG VON GEMEINSAMEN SCHLÜSSELN
MÉTHODE SÉCURISÉE POUR LE TRANSFER DE CLÉS PARTAGÉES

(30) Priority: 11.01.2001 EP 01480003
(43) Date of publication of application: 14.01.2004
(73) Proprietor: Lenovo (Singapore) Pte. Ltd., Singapore 486048 (SG); Compagnie IBM France, 92066 Paris La Défense Cedex (FR)
(72) Inventor: BENAYOUN, Alain, F-06800 Cagnes sur Mer (FR); LE PENNEC, Jean-François, 06100 Nice (FR); FIESCHI, Jacques, F-06410 Biot (FR); ROY, Pascal, F-06410 Biot (FR)
(74) Representative: Schäfer, Horst
(86) International application number: PCT/EP2002/000216
(87) International publication number: WO 2002/056155

(56) References cited:
- WO-A-00/54126
- WO-A-93/06542
- WO-A-98/25375
- US-A- 5 146 499
- US-A- 5 224 163
- US-A- 5 402 492
- US-A- 5 887 131

## Description

### Technical field

The present invention relates to the systems and procedures at the disposal of the users to prevent their computer devices to be stolen or hacked and relates more particularly to a security system for preventing a personal computer from being used by unauthorized people.

### Background

As computer devices such as personal computers, portable computer or other handheld devices are targets for hackers and thieves, passwords are used to protect the vital data or prevent the computer from being used by unauthorized people. These passwords are in conjunction with encryption and authentication keys used to establish secure communications between computers. It is possible today to install a program in the computer that will encrypt sensitive data so that these data cannot be read by anyone who does not have the unlocking key. But it is necessary to store the key somewhere, and if this key is not complex, it will be found.

Despite the constant development of new technologies, passwords are still the most common security tools; they are also the most abused, and often the easiest for an attacker to break. Passwords present a kind of security paradox. The best passwords are the most difficult to guess: long and random. Unfortunately, these are also the most difficult to remember. Moreover, most experts strongly recommend to use different passwords for each e-mail, e-commerce, or other account, and that you change them regularly. As a result, most people either choose easily guessable passwords, or write them down where they can be copied or stolen.

The answer to this conundrum is to use password safes. These programs provide a space to store the long, complex, or random passwords, and then encrypts them so that they cannot be stolen. Some password safes will even generate random passwords for you. But they are located on your disk and need also a password to activate the software.

Security in transmission with encryption (cryptography) and user, device or data authentication (signature) may be achieved by using Public Key Infrastructure (PKI). In PKI cryptography, a user has a pair of keys: public and private. As their names suggest, the private key is kept private, while the public key is distributed to other users. The owner of the private key never shares the private key with anyone. The public and private keys of a particular user are related via complex mathematical structures in such a way that inexorably links one key with the other. This relationship is crucial to making public/private key-based encryption work.

The public key is used as the basis for encrypting a message, while the private key is necessary for the recipient to decrypt the encrypted message. Only the bearer of the private key can decrypt the message. Even the person who did the encrypting cannot decrypt the message he just encrypted, because he does not know the private key.

For digital signatures, two different keys are generally used, one for creating a digital signature or transforming data into a seemingly unintelligible form, and another key for verifying a digital signature or returning the message to its original form. Computer equipment and software utilizing two such keys is often termed an "asymmetric cryptosystem".

The keys of an asymmetric cryptosystem for digital signatures are termed the private key, which is known only by the signer and used to create the digital signature, and the public key, which is ordinarily more widely known and is used to verify the digital signature. A recipient must have the corresponding public key in order to verify that a digital signature is the signer's. If many people need to verify the signer's digital signatures, the public key must be distributed to all of them, perhaps by publication in an on-line repository or directory where they can easily obtain it.

Although the keys of the pair are mathematically related, it is computationally infeasible to derive one key from the other, if the asymmetric cryptosystem has been designed and implemented securely for digital signatures.

Although many people know the public, key of a given signer and use it to verify the signatures, they cannot discover the signer private key and use it to forge digital signatures.

The disclosure US 5 146 499 shows a authentication of a smart card comprising a micro computer (PC) provided with an internal reader and an electronic smart card linked to the PC. The cryptographic procedure of a DES or a DEA type is performed with a help of a key associated with dedicated identity numbers of the smart card and a key associated with a identity number of the PC.

Prior art document WO 00/54126 discloses a method according to the preamble of claim 1.

### Summary of the invention

Accordingly, the main object of the invention is to provide a security system based upon the Public Key Infrastructure (PKI) as defined in independent claim 1.

Further embodiments of the invention are specified in the appended dependent claims.

### Brief description of the drawings

The above and other objects, features and advantages of the invention will be better understood by reading the following more particular description of the invention in conjunction with the accompanying drawings wherein :
- Fig. 1 is a block diagram representing the security system with the extractable security piece and the PC security area and its link with the computer device system.
- Fig. 2 is a schematic representation of the interactions between the extractable security piece, the PC security area and the computer device system in case of attachment of the extractable security piece on the main computer device.
- Fig. 3 is a schematic representation of the interactions between the main extractable security piece, the PC security area, a guest extractable security piece and the computer device system in case of attachment of a guest extractable security piece on the main computer device, according to the present invention.
- Fig. 4 is a schematic representation of interactions between the extractable security piece, the main PC security area, a guest PC security area and the main and guest computer device systems in case of attachment of the main extractable security piece on a remote computer device.

### Detailed description of the invention

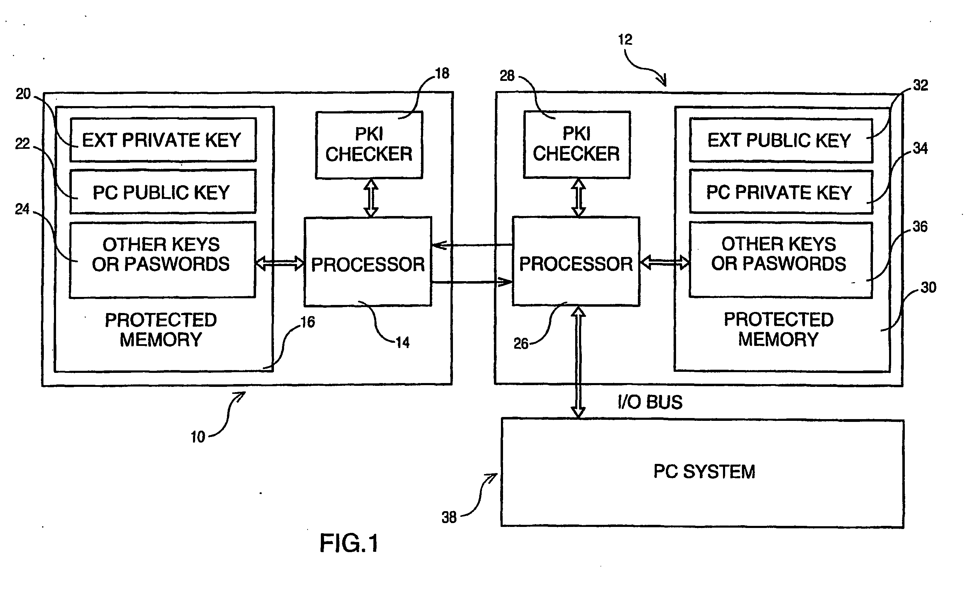

Referring to Fig. 1, the main principle is to use an extractable key 10 and a PC security area 12 in combination. The extractable security piece 10 is unique with the computer device on which it is attached. Without this extractable security piece, the computer device and all included or attached devices such as memory, hard disk and various peripherals cannot be used. This piece can be a keyboard key or an integrated mouse button, a block containing the small info display or a LED area or a PCMCIA card. In the latter case, one of the PCMCIA slots cannot be used for other purposes. The other feature, a PC security area 12 is any part of the computer device hardware/firmware including the operating system and the installed applications. This PC security area is generally included in the computer device motherboard or another mandatory board or a card in the computer device and cannot be removed.

The extractable security piece contains a processor 14 which can be a microprocessor having an integrated communication port, a memory 16 protected against an external read (it might be a memory integrated within processor 14) and a PKI checker 18 that is a software application used by the processor 14 to encrypt or authenticate data sent to PC security area 12. Protected memory 16 contains an extractable private key 22 (public key of the computer device) and other keys or passwords 24.

Similarly, PC security area 12 contains a processor 26 which communicates with processor 14 via a communication port, a PKI checker 28 that is a software application used to encrypt or authenticate data sent to extractable security piece 10 and a protected memory 30 which could be integrated within processor 26. The protected memory 30 contains an extractable public key 32 (the public key of the extractable security piece), a PC private key 34 and other keys or passwords 36.

When the extractable security piece which had been previously removed from the computer device by the authorized user, is put again at its right location within the computer device, a mutual authentication with the PC security area is automatically performed as explained below. When this checking is completed, process 26 may open the access to the PC SYSTEM 38 by its I/O bus for OS or application password checking application authentication or encryption. At this moment, anyone of processor 14 or 26 may help perform encryption or authentication. Furthermore, computer device system 38 may open communication to processor 26 for validating external users such as remote users.

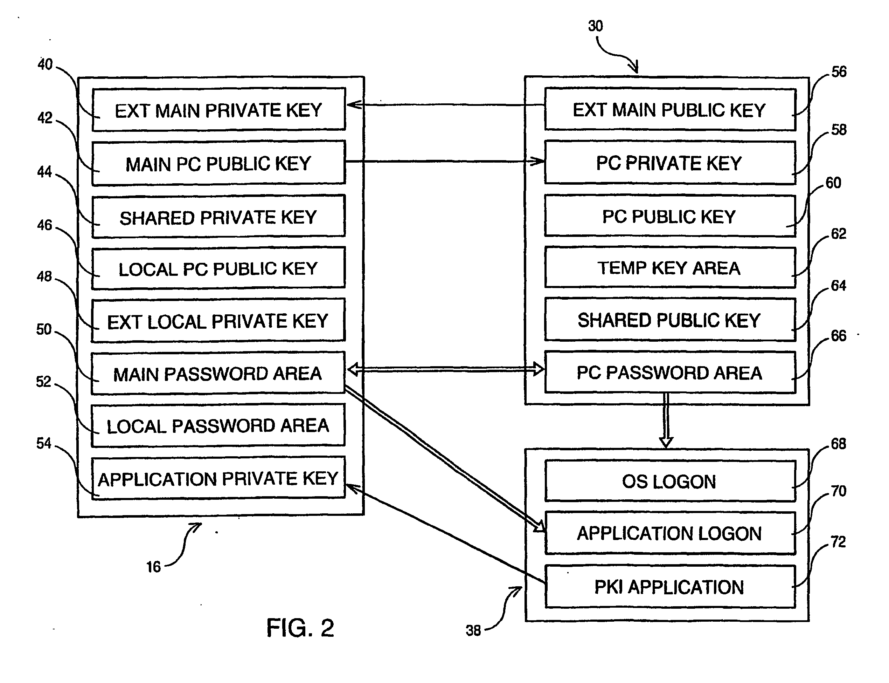

The protected memory 16 of extractable security piece 10 includes a set of storage areas which are illustrated in more details in Fig. 2. The storage areas contain either keys that can be the keys themselves or the full certificates including these keys, or password areas.

Thus, the storage areas contains the following :
- EXT MAIN PRIVATE KEY 40 which is the private key that is unique to identify the extractable security piece 10. It is similar to a serial number but much more complex and not readable. This private key is used by the extractable security piece to identify itself to the attached computer device and to allow the computer device to send encrypted messages to this piece which can be decrypted only with this private key.
- MAIN PC PUBLIC KEY 42 which is the public key that corresponds to the computer device and is used to encrypt messages sent to the PC security area 12 such as requesting to authorize the use of the security piece in this environment. It is also used to authenticate messages coming from the PC security area 12.
- SHARED PRIVATE KEY 44 which is a private key that is generated by the user and transmitted to other security pieces that will be granted on this computer device for some applications as explained hereafter.
- LOCAL PC PUBLIC KEY 46 which is the PC public key used to identify the extractable security piece on a computer device that is not the computer device to which this security piece belongs.
- EXT LOCAL PRIVATE KEY 48 which is the private key unique to identify an extractable security piece put on a computer device which is not the computer device to which this security piece belongs. This key together with LOCAL PC PUBLIC KEY forms a set of keys corresponding to a possible guest computer device as explained hereafter. These keys can be duplicated to allow multiple computer device attachment.
- MAIN PASSWORD AREA 50 which contains the passwords necessary for use in local attachment with the main computer device or for remote attachment.
- LOCAL PASSWORD AREA 52 which is used in guest mode when the extractable security piece is authorized on another computer device as explained hereafter. The authorized user may want to keep all its passwords on the extractable security area and not on the computer device itself.
- APPLICATION PRIVATE KEY 54 which is a key that can be used for some applications such as building secure IPSec tunnels. It can also be used to implement the PKI procedure for performing encryption and/or authentication. Multiple such fields may be available on the extractable security piece.
   The protected memory 30 of the PC security area 12 includes functions similar to the ones which are included in the extractable security piece.
- EXT MAIN PUBLIC KEY 56 which is the public key of the extractable security piece 10 and is used by the computer device to send encrypted messages that are decrypted by the extractable security piece 10 by using the MAIN PC PUBLIC KEY.
- PC PUBLIC KEY 60 which is the public key of the computer device being used by the computer device to send encrypted messages to other external devices. This key may be identical to MAIN PC PUBLIC KEY of the extractable security piece. It is in fact identical if the extractable security piece is the one which corresponds to the computer device (main computer device with main security piece).
- TEMP KEY AREA 62 which can contain a temporary key used to store a private key when another extractable security piece is put on the main computer device as explained hereafter.
- SHARED PUBLIC KEY 64 which is a public key that is transmitted to another extractable security piece put on the main computer device as explained hereafter.
- PC PASSWORD AREA 66 which contains the PC passwords which can be exchanged with passwords stored in MAIN PASSWORD AREA 50 of the extractable security piece or can be used to update these passwords.

The computer device system 38 includes 0S LOGON 68 which is the operating system logon that validates the login password through a compare on what is stored in either PC PASSWORD AREA 66 or MAIN PASSWORD AREA 50 when the extractable security piece has been recognized. It also includes APPLICATION LOGON 70 which is used when an application needs a password which is in MAIN PASSWORD AREA 50 within the extractable security piece, and PKI APPLICATION 72 which uses APPLICATION PRIVATE KEY 54 also within the extractable security piece.

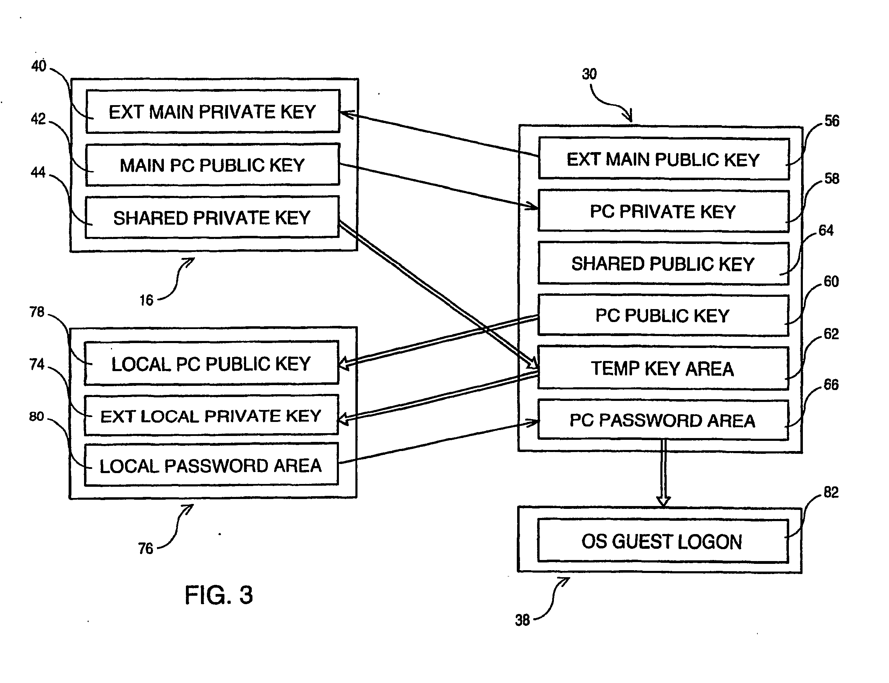

Fig. 3 illustrates the case where another extractable security piece is used with the main computer device in place of the main extractable security piece. In such a case, the first step consists in inserting the main extractable security piece into the main computer device. The extractable security piece is authenticated as already mentioned thanks to the couples EXT MAIN PRIVATE KEY 40 and EXT MAIN PUBLIC KEY 56 on the one hand and MAIN PUBLIC KEY 42 and PC PRIVATE KEY 58 on the other hand.

Then, the SHARED PRIVATE KEY 44 within memory 16 of the main extractable security piece is copied into TEMP KEY AREA 62 of the memory 30 of the PC security area. The main extractable security piece may then be removed from the computer device and replaced by the guest extractable security piece. Of course, the identity of the latter security piece can be checked with both external serial number and by the server which stores the corresponding public key. After that, the key within TEMP KEY AREA 62 is loaded into EXT LOCAL PRIVATE KEY 74 within the memory 76 of the guest extractable security piece. Therefore, the EXT LOCAL PRIVATE KEY 74 of the guest extractable security piece matches with the SHARED PUBLIC KEY 64 of the computer device for communicating together.

Finally, the computer device stores its PC PUBLIC KEY 60 into the memory 76 of the guest extractable security piece as the LOCAL PC PUBLIC KEY 78 in order to complete the bi-directional secure link. Once this link is established, the local password area 80 of the guest extractable security piece can be used via PC PASSWORD AREA 66 of the computer device for OS GUEST LOGON 82 of the computer device system.

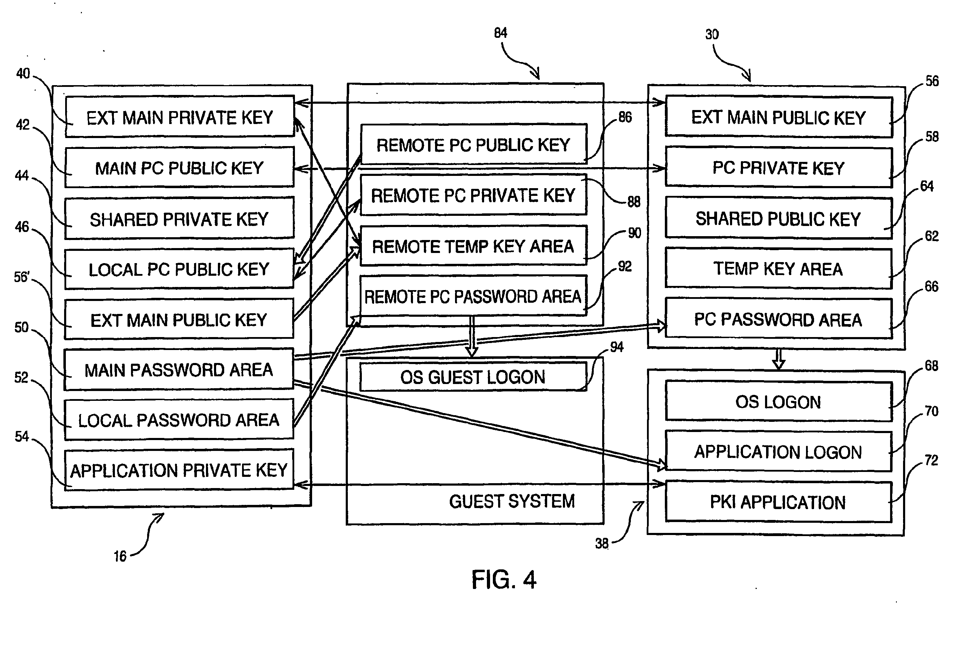

Another application is when the main extractable security piece is inserted into a remote computer device or a guest computer device in place of being put into the main computer device. The process to be implemented for such a case is illustrated in Fig. 4. Wherein the bi-directional arrows represent the relationship between entities whereas the bus means data transfer. Note that the references used in Fig. 2 have been kept when such references designate the same entities such as the different areas of the main extractable security piece or the PC security area of the main computer device.

Basically, the extractable security piece connects with the guest computer device security area using on its side the EXT MAIN PRIVATE KEY 40 to transmit the corresponding public key to the REMOTE TEMP KEY AREA 90 that will now contain the EXT MAIN PUBLIC KEY. Private and public keys are generated simultaneously. The public key can be provided to external devices without risk, and even if the remote computer device is not a well known computer device, there is no problem to give it the Public key. In addition, each user may define some rules to change both private and public keys regularly and can update the opposite equipment to also change the previous public key with the new one.

All the update or key transmission between different entities can be done using certificates which contain the device ID and the public key. These certificates are certified by Certificate Authority (CA) Servers which are trusted entities. Such CA servers can therefore be used as authentication servers. They know for example all public keys of all devices of a customer and can therefore allow them to build secure communication together. A common rule may be to trust only certificates issued by this CA.

Using this method the remote computer device can verify that the public key corresponds really to this user in order to finally accept to provide some logon within this system once a cross authentication is performed between the user security piece and the remote computer device. The security piece needs to receive the PC public key to securely communicate with the remote computer device. The latter will transfer its REMOTE PC PUBLIC KEY 86 (matching with REMOTE PC PRIVATE KEY 88) into field LOCAL PC PUBLIC KEY 46 located in the memory 16 of security piece 10. At this step, secure communications can be established between the guest computer device and the security piece. The user can then logon as guest into the remote computer device in a profile that allows remote connection.

One type of connection may be to connect to the CA to verify the remote computer device identity before doing more in this environment. In that case, a verification of the REMOTE PC PUBLIC KEY 86 is performed.

The main object of such interconnection is to provide the user with an access to its main computer device in a secure way. The connection to the main PC security area is established using the main set of keys as described in figure 1 : EXT MAIN PRIVATE KEY 40 and MAIN PUBLIC KEY 42 on the security piece side and EXT MAIN PUBLIC KEY 56 and PC PRIVATE KEY 58 on the MAIN computer device side. There is no possibility for the remote computer device to decrypt data communication between the main extractable security piece and its main computer device even if it does not know the public key of each as it is the basic principle of PKI.

Finally through this secure channel, all passwords stored in MAIN PASSWORD AREA 50 can be used and securely transferred to PC PASSWORD AREA 66 on the main computer device security area and used as APPLICATION LOGON 70 for a normal logon. The remote computer device is then viewed as a local equipment. At this step, the shared secret keys may be exchanged to build a secure communication channel between the main computer device and the remote computer device that will then use less computing resources than a PKI communication.

Additionally, applications can work as already described in figure 1, that is PKI APPLICATION 72 can use the key stored in APPLICATION PRIVATE KEY 54 with the help of PKI checkers that are not represented in Fig. 4 but are present on each security piece and each security area.

## Claims

1. Security method for authorizing a main computer device owned by an authorized user to be used by a guest user wherein said main computer device includes
- a main extractable security piece (10) containing at least an
extractable piece's main private key (40), a main PC public key (42) and a first processor (14), and
- a PC security area (12) containing at least an extractable piece's main public key (56) and a PC private key (58) both constituting a Public Key Infrastructure (PKI) with said keys of a said extractable security piece and a second processor (26) for
exchanging data of authentication with said first processor for mutual authentication using said Public Key Infrastructure;
said method being **characterized by** the steps of:
- inserting said main extractable security piece into said main computer device,
- removing said main extractable security piece from said main computer device after said first and second processors have exchanged said data of authentication, and
- inserting into the same location a guest extractable security piece (76) of a guest computer owned by said guest user, said guest extractable security piece including the same functions and areas as said main extractable security piece,
- wherein said main extractable security piece (10) includes a shared private key (44) which is transferred into a temporary key area (62) of said PC security area (12) when said main extractable security piece is in- , serted into said main computer device and after mutual authentication
- has occured, when said main extractable security piece (10) has been replaced by said guest extractable security piece in said computer device, transferring said shared private key (44) from said PC security area (12) of said main computer device into said guest extractable security piece (76), the content thereof matching a shared public key (64) stored in said main computer device, and transferring the PC public key (60) from said PC security area as a local PC public key (74) into said guest extractable security piece.

2. Security method according to claim 1, wherein said extractable security piece (10) is a part of said computer device such as a keyboard key or an integrated mouse button.

3. Security method according to any one of claims 1 to 2, wherein said extractable security piece (10) is a PCMCIA card.

4. Security method according to any one of the preceding claims, wherein said PC security area (12) is included in the computer device motherboard or another mandatory board or a card in the computer device.

## Patentansprüche

1. Sicherheitsverfahren zum Autorisieren eines Hauptcomputergeräts, das einem autorisierten Benutzer zugeordnet ist, um benutzt zu werden von einem Gastbenutzer, wobei das Hauptcomputergerät enthält:
- ein Haupt- herausnehmbares Sicherheitsteil (10), das zumindest
einen des herausnehmbaren Teils Haupt- privaten Schlüssel (40), einen Haupt PC öffentlichen Schlüssel (42) und einen ersten Prozessor (14) enthält,
- einen PC Sicherheitsbereich (12), der zumindest einen des herausnehmbaren Teils Haupt-öffentlichen Schlüssel (56) und einen PC privaten Schlüssel (58) enthält, wobei beide eine Public Key Infrastruktur (PKI) mit den Schlüssel des herausnehmbaren Sicherheitsteils bilden
und einen zweiten Prozessor (26) zum Austauschen von Daten der Authentifizierung mit dem ersten Prozessor für gemeinsame Authentifizierung unter Verwendung genannter Public Key Infrastruktur, aufweist,
wobei das Verfahren **gekennzeichnet ist durch** die Schritte:
- Einführen des genannten Haupt- herausnehmbaren Sicherheitsteils in genanntes Haupt Computergerät,
- Entfernen des genannten Haupt- herausnehmbares Sicherheitsteils aus dem Haupt-Computergerät, nachdem genannte erster Prozessor und zweiter Prozessor genannte Daten der Authentifizierung ausgetauscht haben,
- Einführen in den gleichen Ort ein Gast- herausnehmbares Sicherheitsteil (76) aus einem Gast Computer, der dem genannten Gastbenutzer zugeordnet ist, wobei genanntes Gast- herausnehmbares Sicherheitsteil gleiche Funktionen und Bereiche wie genanntes Hauptherausnehmbares Sicherheitsteil enthält,
wobei genanntes Haupt- herausnehmbares Sicherheitsteil (10) einen gemeinschaftlichen privaten Schlüssel (44), der in einen temporären Schlüsselbereich (62) des genannten PC Sicherheitsbereich (12) transferiert wird, wenn genanntes Haupt- herausnehmbares Sicherheitsteil in genanntes Haupt- Computergerät eingeführt ist und nachdem gemeinsame Authentifizierung stattgefunden hat, enthält,
- wenn genanntes Haupt- herausnehmbares Sicherheitsteil (10) **durch** genanntes Gast- herausnehmbares Sicherheitsteil in genanntem Computergerät ersetzt wurde, Transferieren des genannten geteilten privaten Schlüssel (44) von der genannten PC Sicherheitsbereich (12) des genannten Haupt-Computergeräts in genanntes Gast - herausnehmbares Sicherheitsteil (76), wobei dessen Inhalt übereinstimmt mit einem gemeinsamen öffentlichen Schlüssel (64), der in genanntem Haupt-Computergerät gespeichert ist, und Transferieren des PC öffentlichen Schlüssels (60) von genannter PC Sicherheitsbereich als lokaler PC öffentlicher Schlüssel (74) in genanntes Gast- herausnehmbares Sicherheitsteil.

2. Sicherheitsverfahren nach Anspruch 1, wobei genanntes herausnehmbares Sicherheitsteil (10) ein Teil des genannten Computergeräts wie eine Tastaturtaste oder eine integrierter Mausknopf ist.

3. Sicherheitsverfahren nach einem der Ansprüche 1 bis 2, wobei genanntes herausnehmbares Sicherheitsteil eine PCMCIA Karte ist.

4. Sicherheitsverfahren nach einem der vorhergehenden Ansprüche, wobei genannte PC Sicherheitsbereich (12) in einem Computergerät Motherboard oder anderen notwendigen Board oder einer Karte in dem Computergerät enthalten ist.

## Revendications

1. Méthode sécurisée pour permettre qu'un ordinateur principal en la possession d'un utilisateur autorisé soit utilisé par un utilisateur invité, ledit ordinateur principal comprenant :
- un élément de sécurité principal extractible (10) contenant au moins une clé privée principale extractible (40), une clé publique de PC (42) et un premier moyen de traitement (14), et
- une zone de sécurité de PC (12) contenant au moins une clé publique principale extractible (56) et une clé privée de PC (58) constituant avec lesdites clés dudit élément de sécurité extractible une infrastructure de clé publique (PKI, de l'anglais Public Key Infrastructure) et un deuxième moyen de traitement (26) pour échanger des données d'authentification avec ledit premier moyen de traitement afin d'assurer une authentification mutuelle en utilisant ladite infrastructure de clé publique ;
ladite méthode étant **caractérisée par le fait qu'**elle comprend les étapes consistant à :
- insérer ledit élément de sécurité principal extractible dans ledit ordinateur principal,
- retirer ledit élément de sécurité principal extractible dudit ordinateur principal une fois que le premier et le deuxième moyens de traitement ont échangé lesdites données d'authentification, et
- insérer en position dans le même emplacement un élément de sécurité d'utilisateur invité extractible (76) d'un ordinateur invité en la possession dudit utilisateur invité, ledit élément de sécurité d'utilisateur invité extractible comprenant les mêmes fonctions et les mêmes zones que l'élément de sécurité principal extractible,
- ledit élément de sécurité principal extractible (10) comprenant une clé privée partagée (44) qui est transférée dans une zone de clé temporaire (62) de ladite zone de sécurité de PC (12) quand ledit élément de sécurité principal extractible est inséré dans ledit ordinateur principal et une fois que l'authentification mutuelle a été réalisée,
- quand ledit élément de sécurité principal extractible (10) a été remplacé par ledit élément de sécurité d'utilisateur invité extractible dans ledit ordinateur, transférer ladite clé privée (44) de ladite zone de sécurité de PC (12) dudit ordinateur principal audit élément de sécurité d'utilisateur invité extractible (76), le contenu de celle-ci correspondant à une clé publique partagée (64) stockée dans ledit ordinateur principal, et transférer la clé publique de PC (60) de ladite zone de sécurité de PC en tant que clé publique locale de PC (74) audit élément de sécurité d'utilisateur invité extractible.

2. Méthode sécurisée selon la revendication 1, ledit élément de sécurité extractible (10) étant une partie dudit ordinateur principal comme une touche de clavier ou un bouton de souris.

3. Méthode sécurisée selon l'une quelconque des revendications 1 à 2, ledit élément de sécurité extractible (10) étant une carte PC dite PCMCIA.

4. Méthode sécurisée selon l'une quelconque des revendications précédentes, ladite zone de sécurité de PC (12) étant incluse dans la carte mère de l'ordinateur ou dans une autre carte essentielle ou une carte particulière présente dans l'ordinateur.
